# EUROPÄISCHE PATENTSCHRIFT

(11) **EP 0 768 965 B1**
(45) Veröffentlichungstag und Bekanntmachung des Hinweises auf die Patenterteilung: **03.05.2000**
(21) Anmeldenummer: 96903907.2
(22) Anmeldetag: 28.02.1996
(51) Int. Cl.: B60T 8/00

(54) **VERFAHREN UND VORRICHTUNG ZUR STEUERUNG DER BREMSANLAGE EINES FAHRZEUGS**
PROCESS AND DEVICE FOR CONTROLLING THE BRAKING SYSTEM OF A VEHICLE
PROCEDE ET DISPOSITIF DE COMMANDE DU SYSTEME DE FREINAGE D'UN VEHICULE

(30) Priorität: 24.03.1995 DE 19510746
(43) Veröffentlichungstag der Anmeldung: 23.04.1997
(73) Patentinhaber: ROBERT BOSCH GMBH, 70442 Stuttgart (DE)
(72) Erfinder: MEIER, Thomas, F-77123 Le Vaudové (FR); DRESSLER, Norbert, D-71665 Vaihingen (DE); STREHLE, Alfred, D-70736 Fellbach (DE)
(86) Internationale Anmeldenummer: DE9600328
(87) Internationale Veröffentlichungsnummer: WO9630241

(56) Entgegenhaltungen:
- EP-A- 0 509 237
- DE-A- 4 226 646
- FR-A- 2 539 687
- GB-A- 2 135 413

## Beschreibung

### Stand der Technik

Die Erfindung betrifft ein Verfahren und eine Vorrichtung zur Steuerung der Bremsanlage eines Fahrzeugs gemäß den Oberbegriffen der unabhängigen Patentansprüche.

Aus der WO-A 94/13517 ist ein Verfahren bzw. eine Vorrichtung zur Steuerung der Bremsanlage eines Kraftfahrzeugs bekannt, bei welchen zur optimalen Verteilung der Bremskraft zwischen Vorder- und Hinterachse die Differenz zwischen Raddrehzahlen der Vorder- und Raddrehzahlen der Hinterachse bestimmt wird. Dieser Schlupf zwischen Vorder- und Hinterachse wird mit einem vorgegebenen Grenzwert verglichen, welcher bei erkannter geraden Fahrt betragsmäßig größer als bei Kurvenfahrt gewählt wird. Überschreitet der erfaßte Schlupf diesen vorgegebenen Grenzwert, wird eine weitere Druckerhöhung an den Hinterachsbremsen verhindert. Trotz der Vorgabe zweier verschiedener Schwellwerte abhängig von der jeweiligen Fahrsituation kann es vorkommen, daß das Druckniveau in der Hinterachse zu hoch ist. Dies ist insbesondere dann der Fall, wenn von einer Geradeausbremsung im eingeschwungenen Zustand bei angenäherter idealer Bremskraftverteilung der Fahrer in eine Kurve einfährt. Da das Druckniveau in diesem Fall zu hoch ist, zeigen die Hinterräder Blockiertendenz, die durch eine Antiblockierschutzfunktion vermindert wird. Bei Aktivierung der Antiblockierschutzfunktion wird Druck in den Hinterradbremsen abgebaut, wobei durch den damit verbundenen Anlauf der Rückförderpumpe eine starke Reaktion am Bremspedal entsteht. Diese plötzliche Reaktion am Bremspedal kann den Fahrer verunsichern und so zu ungewollten Situationen führen.

Aus der EP 509 237 A1 ist ein Verfahren und eine Vorrichtung zur Steuerung der Bremsanlage eines Kraftfahrzeugs bekannt, bei welchem zur Verteilung der Bremskraft zwischen einer Vorder- und einer Hinterachse wenigstens der Bremsdruck in den Radbremsen der Hinterachse gesteuert wird. Dabei wird bei Überschreiten eines vorgegebenen Schwellenwertes durch die Differenz zwischen der Raddrehzahl wenigstens eines Vorder- und wenigstens eines Hinterrades Bremsdruck an den Hinterachsbremsen abgebaut. Wird der vorgegebene Schwellenwert überschritten, findet sofort ein Bremsdruckabbau statt, der zu einem unkomfortablen Verhalten des Fahrzeugs führt und somit zumindest einige Fahrer verunsichert.

Es ist daher Aufgabe der Erfindung, Maßnahmen anzugeben, die im Teilbremsgebiet die Stabilität des Fahrzeugs auch ohne Antiblockierschutzeingriff weitgehend sicherstellen. Dabei soll dem Fahrer keine oder nur eine geringe Pedalrückwirkung zugemutet werden.

Diese Aufgabe wird durch die kennzeichnenden Merkmale der unabhängigen Patentansprüche gelöst.

### Vorteile der Erfindung

Die erfindungsgemäße Vorgehensweise stellt im Teilbremsgebiet die Stabilität des Fahrzeugs beim Bremsvorgang weitgehend sicher, ohne daß der Antiblockierschutzregler ausgelöst werden muß.

Besonders vorteilhaft ist, daß der Antiblockierschutzregler seltener eingreifen muß und so die Lebensdauer der Komponenten der Bremsanlage erhöht wird.

Vorteilhaft ist ferner die Vorgabe von zwei Geschindigkeitsdifferenzschwellen (Schlupfschwellen), bei welchen das Überschreiten der ersten Schwelle ein Druckhalten in der Hinterachsbremse, bei Überschreiten der zweiten Differenzschwelle ein Druckabbau in den Hinterachsbremsen erfolgt. Dadurch wird ein Druckabbau in den Hinterachsbremsen ohne zusätzliche Sensorsignale ermöglicht.

Da die zweite Geschwindigkeitsdifferenzschwelle empfindlicher als die den Antiblockierschutzregler aktivierende Schlupfschwelle ist, findet in vorteilhafter Weise der Druckabbau an der Hinterachse vor Eingriff des Antiblockierschutzreglers statt.

Besonders vorteilhaft ist, daß während des Druckabbaus an der Hinterachse der Rückförderpumpenmotor nicht angesteuert wird und somit keine oder nur eine sehr schwache Reaktion am Bremspedal spürbar ist.

Durch eine Absteuerunug des Rückförderpumpenmotors nach Abschluß des Bremsvorgangs für eine vorgegebene Zeit wird die Speicherkammer, in die beim Druckabbau der Druckausgleich stattfindet, entleert.

Vorteilhaft in diesem Zusammenhang eine Vorgabe der Ansteuerzeit abhängig von der abzupumpenden Betriebsmittelmenge.

Weitere Vorteile ergeben sich aus der nachfolgenden Beschreibung von Ausführungsbeispielen sowie aus den abhängigen Patentansprüchen.

### Zeichnung

Die erfindungsgemäße Vorgehensweise wird nachfolgend anhand der in der Zeichnung dargestellten Ausführungsformen näher erläutert. Dabei zeigt Figur 1 ein Übersichtsblockschaltbild eines Steuersystems für die Bremsanlage eines Fahrzeugs, bei welchem die erfindungsgemäße Vorgehensweise verwirklicht ist. Figur 2 zeigt Zeitdiagramme von wesentlichen Signalen zur Verdeutlichung der erfindungsgemäßen Vorgehensweise. Das Flußdiagramm nach Figur 3 gibt Hinweise auf eine Realisierung der erfindungsgemäßen Vorgehensweise als Rechnerprogramm.

### Beschreibung von Ausführungsbeispielen

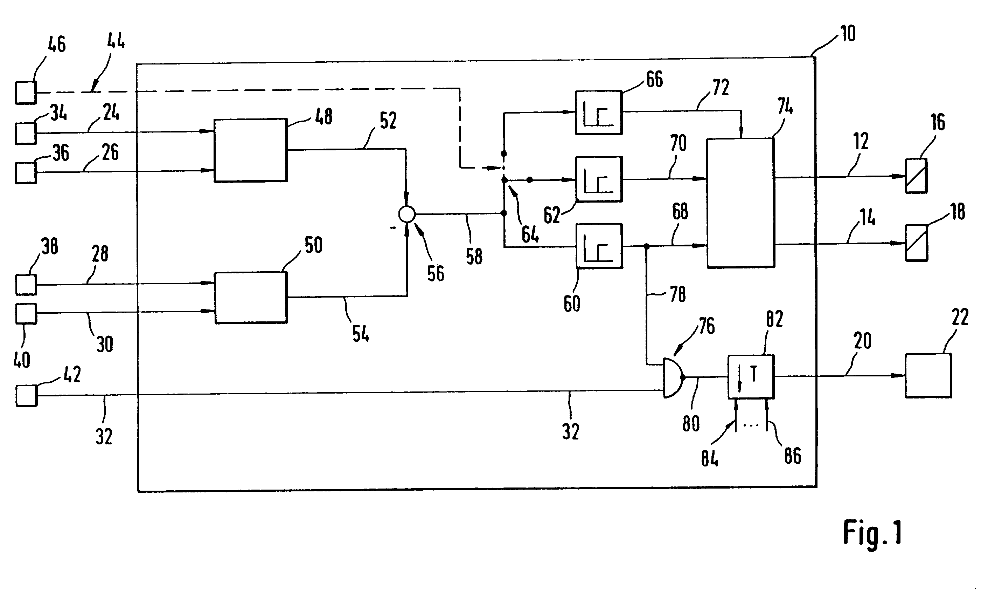

In Figur 1 ist mit 10 eine Steuereinheit dargestellt, welche über Ausgangsleitungen 12 und 14 Ventile 16 und 18 zur Steuerung des Bremsdrucks in den Hinterachsbremsen betätigt. Ferner steuert die Steuereinheit 10 über eine Ausgangsleitung 20 den Motor 22 einer Rückförderpumpe an, welche bei einem Druckabbau die in eine Speicherkammer einströmende Druckmittelmenge in einen Vorratsbehälter fördert.

Neben der dargestellten Ansteuerung der Hinterachsbremsen umfaßt die Steuereinheit 10 aus Übersichtlichkeitsgründen nicht dargestellte weitere Funktionen, beispielsweise einen Antiblockierschutzregler, in deren Rahmen auch den Vorderrädern zugeordnete Bremsventile zur Drucksteuerung betätigt werden. Die Ventilanordnungen 16 und 18 bestehen dabei aus einem oder mehreren Ventilen, welche einen Druckaufbau, ein Druckhalten und einen Druckabbau in der jeweiligen Radbremse ermöglichen. Im bevorzugten Ausführungsbeispiel wird dies durch zwei 2/2-Magnetventile pro Radbremse erreicht, wobei eines als Einlaßventil, das andere als Auslaßventil geschaltet ist.

Als Eingangsleitungen weist die Steuereinheit wenigstens die Eingangsleitungen 24, 26, 28 und 30 sowie eine Eingangsleitung 32 auf. Die Eingangsleitungen 24 und 26 führen dabei Drehzahlsignale von Drehzahlsensoren 34 und 36 der Vorderräder der Steuereinheit zu. Entsprechend führen die Eingangsleitungen 28 und 30 Drehzahlsignale von Drehzahlsensoren 38 und 40 der Hinterräder des vorzugsweise zweiachsigen Fahrzeugs zu. Bei mehrachsigen Fahrzeugen werden entsprechend mehr Drehzahlsensoren eingesetzt. Die Leitung 32 führt ein Signal von einem Bremspedalschalter 42 zu, welches die Bremsbetätigung durch den Fahrer erfaßt. In einem bevorzugten Ausführungsbeispiel weist die Steuereinheit 10 eine weitere Eingangsleitung 44 auf, die ein den Lenkwinkel repräsentierendes Signal von einem entsprechenden Sensor 46 zuführt. Gegebenenfalls kann anstelle des Lenkwinkelsensors 46 zur Erkennung einer Kurvenfahrt ein Querbeschleunigungssensor eingesetzt werden oder die Kurven- bzw. Geradeausfahrterkennung aus einem Vergleich der Raddrehzahlen der Räder einer Achse, vorzugsweise der lenkbaren Achse, abgeleitet werden. Im letzteren Fall wird bei Überschreiten einer vorgegebenen Drehzahldifferenz eine Kurvenfahrt bzw. bei Unterschreiten dieser Differenz eine Geradeausfahrt erkannt.

In der Steuereinheit 10, in der lediglich die Funktion zur Bremskraftverteilung gemäß der erfindungsgemäßen Vorgehensweise dargestellt ist, führen die Eingangsleitungen 24 und 26 auf eine Einheit 48, während die Eingangsleitungen 28 und 30 auf eine Einheit 50 geführt sind. Die Ausgangsleitung 42 der Einheit 48 führt wie die Ausgangsleitung 54 der Einheit 50 auf eine Vergleichsstufe 56. Deren Ausgangsleitung 58 führt einerseits auf eine erste Schwellwertstufe 60, andererseits auf eine zweite Schwellwertstufe 62. Mittels eines über die Leitung 44 abhängig von einer Kuven- bzw. Geradeausfahrt umschaltbares Schaltelement 64 kann die Leitung 58 auf eine Schwellwertstufe 66 anstelle der Schwellwertstufe 62 geschaltet werden. Die Ausgangsleitungen 68 der Schwellwertstufe 60, 70 der Schwellwertstufe 62 und 72 der Schwellwertstufe 66 führen auf ein Ansteuerelement 74, deren Ausgangsleitungen die Leitungen 12 und 14 bilden. Ferner ist eine Einheit 76 vorgesehen, welchem als erste Leitung eine Leitung 78 von der Leitung 68, zum zweiten die Leitung 32 zugeführt wird. Die Ausgangsleitung 80 der Einheit 76 führt auf ein Zeitglied 82, welches von weiteren Betriebsgrößen beeinflußbar ist (skizziert durch Eingangsleitungen 84 bis 86). Die Ausgangsleitung des Zeitglieds 82 stellt die Leitung 20 zur Ansteuerung des Pumpenmotors 22 dar.

In einem bevorzugten Ausführungsbeispiel wird in der Einheit 48 das am schnellsten drehende Vorderrad im Rahmen einer Maximalwertauswahl ermittelt und der entsprechende Drehzahlwert über die Leitung 52 zur Vergleichsstelle 56 abgegeben. Entsprechend wird in der Einheit 50 im Rahmen einer Minimalwertauswahl das am langsamsten drehende Hinterrad ermittelt und der Vergleichsstelle 56 zugeführt. Diese bildet die Differenz zwischen der Drehzahl des schnellsten Vorderrades und der des langsamsten Hinterrades. Bei erkannter Kurvenfahrt wird die so gebildete Differenz den Schwellwertstufen 60 und 62 zugeführt. Diese geben an ihrem Ausgang ein Signal ab, wenn die zugeführte Differenz die entsprechenden Schwellwerte überschreitet. Dabei ist der in der Schwellwertstufe 62 abgelegte Schwellwert betragsmäßig kleiner als der in der Schwellwertstufe 60 abgelegte. Entsprechend hält das Ansteuerelement 74 den Druck in den Radbremsen der Hinterachse konstant, wenn ein Signal über die Leitung 70 von der Schwellwertstufe 62 erkannt wird. Ein definierter Druckabbau durch Erzeugen entsprechender Abbauimpulse vorbestimmter Menge führt das Ansteuerelement 74 durch, wenn ein Ausgangssignal der Schwellwertstufe 60 erkannt wurde. Bei erkannter Geradeausfahrt schaltet das Schaltelement 64 in die strichliert gezeichnete Position um. Dies bedeutet, daß anstelle der Schwellwertstufe 62 die Schwellwertstufe 66 wirksam ist. Der dort gespeicherte Schwellwert ist betragsmäßig größer als der in der Schwellwertstufe 62 abgelegte, jedoch kleiner als der der Schwellwertstufe 60. Das Ausgangssignal der Schwellwertstufe 66 hat zur Folge, daß das Ansteuerelement 74 den Druck in den Hinterradbremsen hält.

Der Schwellwertes in der Schwellwertstufe 60 ist derart zu dimensioneieren, daß der Schlupf zwischen Vorder- und Hinterraddrehzahlen betragsmäßig kleiner ist als die Schlupfschwelle zur Aktivierung der Antiblockierschutzregelung. Dies hat zur Wirkung, daß ein Druckabbau an der Hinterachse bereits vor einer Blockierneigung der Hinterräder eingeleitet wird. Während des Druckabbaus ist eine Ansteuerung der Rückförderpumpe verboten. Diese erfolgt erst dann, wenn der Bremsvorgang beendet ist. Dies wird durch einen entsprechenden Signalzustandswechsel des Bremspedalschalters 42 erkannt. Ergibt sich demzufolge bei durchgeführtem Druckabbau an der Hinterachse eine Beendigung des Bremsvorgangs, wird - nach einer gewissen Verzögerungszeit um ein unnötiges Ansprechen bei kurzfristigen Störungen zu vermeiden - das Zeitglied 82 aktiviert. Dieses steuert für eine vorgegebene Zeit den Rückförderpumpenmotor an, wodurch die Pumpe das in die Speicherkammer eingeleitete Druckmittel in den Vorratsraum abführt. Die vorgegebene Zeitdauer kann dabei experimentell bestimmt werden. Ferner ist in einem vorteilhaften Ausführungsbeispiel die Zeitdauer abhängig von der Anzahl der ausgegebenen Abbauimpulse. Generell wird die Zeitdauer derart bestimmt, daß die in die Speicherkammer geflossene Druckmittelmenge abgepumpt werden kann.

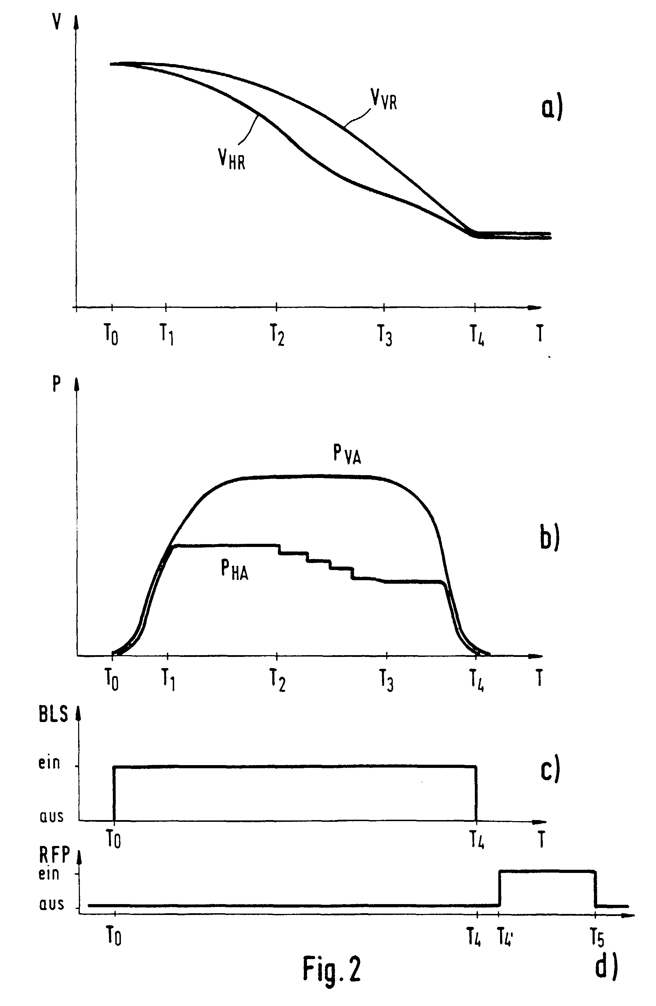

Die Wirkungsweise der erfindungsgemäßen Vorgehensweise ist anhand den Zeitdiagrammen der Figur 2 dargestellt. Dabei zeigt Figur 2a den zeitlichen Verlauf der Drehzahl des schnellsten Vorderrades (Vvr) und des langsamsten Hinterrades (Vhr), während in Figur 2b der Druckverlauf an der Vorderachse (Pva) und der Hinterachse (Pha) dargestellt ist. Figur 2c zeigt den Signalzustand BLS des Bremspedalschalters, während in Figur 2d die Ansteuerung der Rückförderpumpe RFP dargestellt ist.

Zum Zeitpunkt T0 betätigt der Fahrer das Bremspedal. Das Signal BLS wechselt wie in Figur 2c dargestellt seinen Zustand. Durch die Betätigung des Bremspedals steigt der Druck in Vorder- und Hinterachse ab dem Zeitpunkt T0 gleichermaßen an. Entsprechend sinkt ab dem Zeitpunkt T0 die Geschwindigkeit des Vorder- und Hinterrades ab. Zum Zeitpunkt T1 wird die dem ersten Schwellwert entsprechende Differenz zwischen den Drehzahlen erreicht. Dies führt ab dem Zeitpunkt T1 zu einem konstanten Hinterradbremsdruck Pha, während der Vorderradbremsdruck Pva weiterhin entsprechend der Fahrervorgabe sich verändert. Zum Zeitpunkt T2 überschreitet die Differenz zwischen Vorderrad- und Hinterraddrehzahl auch den zweiten Schwellwert. Dies führt ab dem Zeitpunkt T2 zu einem definierten Abbau des Hinterachsdrucks. Realisiert wird dies durch Ausgeben von Abbaupulse vorbestimmter Länge. Zum Zeitpunkt T3 unterschreitet die Differenz zwischen Vorderradund Hinterraddrehzahl den zweiten Schwellwert. Die Folge ist ein ab dem Zeitpunkt T3 konstanter Hinterradbremsdruck. Die Raddrehzahlen nähern sich wieder an. Zum Zeitpunkt T4 löst der Fahrer die Bremse und Hinterräder und Vorderräder drehen in etwa gleich schnell. Nach dem Zeitpunkt T4 wird nach Ablauf einer vorgegebenen Filterungszeit zum Zeitpunkt T4' die Rückförderpumpe zum Abbau des in der Abbauphase zwischen T2 und T3 in die Speicherkammer entleerten Druckmittels angesteuert. Dies erfolgt für eine vorgegebene, ggf. von Betriebsgrößen abhängige Zeitdauer. Zum Zeitpunkt T5 nach Ablauf dieser Zeitdauer wird die Rückförderpumpe ausgeschaltet.

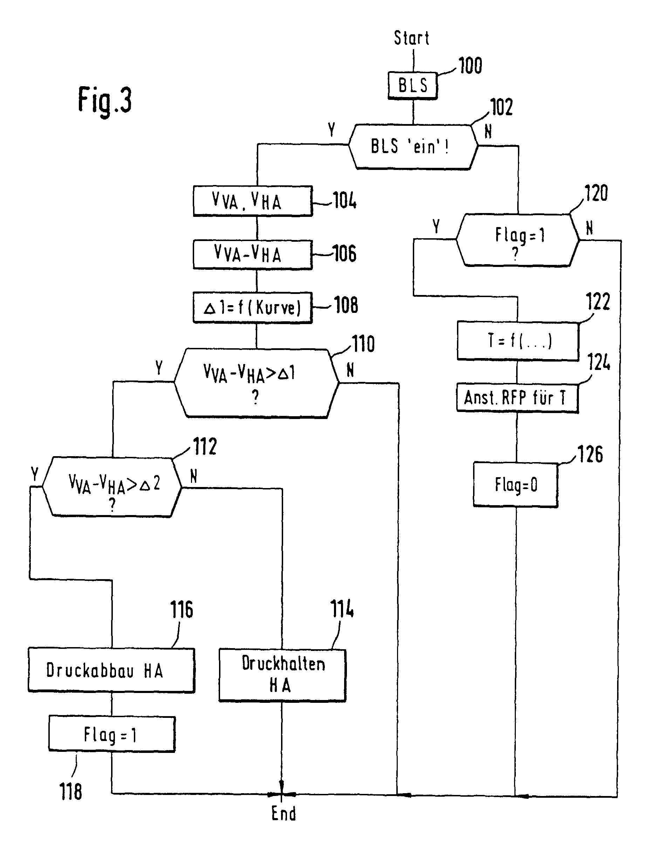

Hinweise für eine Realisierung der erfindungsgemäßen Vorgehensweise als Programm eines Mikrocomputers sind aus dem Flußdiagramm nach Figur 3 zu entnehmen.

Nach Start des Programmteils zu vorgegebenen Zeitpunkten wird im ersten Schritt 100 der Signalzustand BLS des Bremspedalschalters eingelesen. Daraufhin wird im Abfrageschritt 102 überprüft, ob die Bremse betätigt, das heißt der Pedalschalter eingeschaltet ist. Ist dies der Fall, wird im Schritt 104 Vorderrad- und Hinterraddrehzahlen eingelesen, im bevorzugten Ausführungsbeispiel die des schnellsten Vorderrades und des langsamsten Hinterrades. Daraufhin wird im Schritt 106 die Differenz zwischen den Raddrehzahlen des Vorderrads und des Hinterrads gebildet und im Schritt 108 der erste Schwellwert Δ1 ausgewählt, abhängig davon, ob eine Kurve erkannt wurde oder nicht. Dabei ist der Schwellwert Δ1 bei erkannter Kurve betragsmäßig kleiner als bei Geradeausfahrt. Im darauffolgenden Abfrageschritt 110 wird überprüft, ob die Differenz zwischen Vorderrad- und Hinterraddrehzahl diesen ersten Schwellwert überschreitet. Ist dies nicht der Fall, wird der Programmteil beendet.

Ist dies der Fall, wird im Schritt 112 überprüft, ob die Differenz auch den zweiten Schwellwert Δ2 überschreitet. Wenn nicht, wird gemäß Schritt 114 der Druck an der Hinterachse konstant gehalten, während im anderen Fall bei Überschreiten des zweiten Schwellwertes gemäß Schritt 116 an der Hinterachse Druck abgebaut wird. Nach Schritt 116 wird im Schritt 118 eine Marke auf 1 gesetzt und der Programmteil beendet.

Wird im Schritt 102 erkannt, daß das Bremspedal nicht oder nicht mehr betätigt ist, wird im darauffolgenden Abfrageschritt 120 abgefragt, ob die Marke auf dem Wert 1 gesetzt ist. Ist dies der Fall, wird ggf. gemäß Schritt 122 die Ansteuerzeit für die Rückförderpumpe abhängig von Betriebsgrößen, wie beispielsweise der Zahl der ausgegebenen Abbauimpulse, aus einer Tabelle ausgelesen und gemäß Schritt 124 für die ausgelesene Zeit T angesteuert. Daraufhin wird gemäß Schritt 126 die Marke auf den Wert 0 gesetzt und der Programmteil beendet. Eine Beendigung des Programmteils findet auch statt, wenn in Schritt 120 festgestellt wurde, daß die Marke den Wert 0 aufweist.

Figur 3 zeigt demnach eine Vorgehensweise, bei der bei Überschreiten einer ersten und zweiten Schlupfschwelle durch einen Schlupf zwischen den Vorder- und Hinterräder ein definierter Druckabbau an der Hinterachse stattfindet, während bei Überschreiten nur der ersten Schwelle der Druck in der Hinterachse konstant gehalten, ansonsten der Druck entsprechend der Fahrervorgabe sich verändert. Nach Abschluß des Bremsvorgangs wird für eine vorgegebene Zeit die Rückförderpumpe angesteuert.

Neben der dargestellten Abhängigkeit der Bremskraftverteilung von der Differenz zwischen dem schnellsten Vorderrad und dem langsamsten Hinterrad ist die erfindungsgemäße Vorgehensweise auch bei Bremskraftverteilungsregelungen, die auf der Basis von Mittelwerten, von ausgewählten Rädern, etc. arbeiten, einsetzbar.

## Patentansprüche

1. Verfahren zur Steuerung der Bremsanlage eines Kraftfahrzeugs, wobei zur Verteilung der Bremskraft zwischen einer Vorder- und einer Hinterachse wenigstens der Bremsdruck in den Radbremsen der Hinterachse gesteuert wird, wobei bei Überschreiten eines vorgegebenen Schwellenwertes (Δ2) durch eine Differenz zwischen einer Vorderraddrehzahl (VVA) und einer Hinterraddrehzahl (VHA) Bremsdruck an den Hinterachsbremsen abgebaut wird, dadurch gekennzeichnet, daß bei Überschreiten eines Schwellenwertes (Δ1), der betragsmäßig kleiner ist als der vorgegebene Schwellenwert (Δ2), der Bremsdruck an den Hinterachsbremsen konstant gehalten wird.

2. Verfahren nach Anspruch 1, dadurch gekennzeichnet, daß während des Druckabbaus eine Rückförderpumpe (22) der Bremsanlage ausgeschaltet ist.

3. Verfahren nach Anspruch 2, dadurch gekennzeichnet, daß bei Unterschreiten beider Schwellenwerte (Δ1, Δ2) der Druck in den Hinterachsbremsen der Fahrervorgabe folgt.

4. Verfahren nach Anspruch 2, dadurch gekennzeichnet, daß der kleinere Schwellenwert (Δ1) betragsmäßig abhängig ist davon, ob das Fahrzeug sich in einer Kurve oder in Geradeausfahrt befindet.

5. Verfahren nach einem der Ansprüche 2 bis 4, dadurch gekennzeichnet, daß nach Abschluß des Bremsvorgangs bei durchgeführtem Druckabbau an der Hinterachse die Rückförderpumpe (22) der Bremsanlage für eine vorbestimmte Zeit (T) eingeschaltet wird.

6. Verfahren nach Anspruch 5, dadurch gekennzeichnet, daß die vorbestimmte Zeit (T) derart gewählt wird, daß die während der Druckabbauphase in eine Speicherkammer entleerte Druckmittel in einen Vorratsraum abgeführt wird.

7. Verfahren nach Anspruch 5, dadurch gekennzeichnet, daß die Ansteuerzeit (T) für die Rückförderpumpe (22) abhängig von der Anzahl der ausgegebenen Abbauimpulse ist.

8. Verfahren nach einem der vorhergehenden Ansprüche, dadurch gekennzeichnet, daß der größere Schwellenwert (Δ2) derart dimensioniert ist, daß der Schlupf zwischen Vorder- und Hinterraddrehzahlen betragsmäßig kleiner ist als die Schlupfschwelle, die zur Aktivierung der Antiblokkierreglung führt.

9. Verfahren nach einem der Ansprüche 2 bis 7, dadurch gekennzeichnet, daß eine vorgegebene Zeit (T) nach Beendigung des Bremsvorgangs die Rückförderpumpe (22) angesteuert wird.

10. Vorrichtung zur Steuerung der Bremsanlage eines Kraftfahrzeugs, mit einer Steuereinheit (10), welche zur Bremskraftverteilung zwischen einer Vorder- und einer Hinterachse wenigstens den Bremsdruck an den Hinterrädern steuert, die eine Schwellenwertstufe (60) umfaßt, welche bei Überschreiten eines vorgegebenen Schwellenwerts (Δ2) durch die Differenz zwischen einer Vorderraddrehzahl (VVA) und einer Hinterraddrehzahl (VHA) ein Signal zum Bremsdruckabbau in den Hinterachsbremsen abgibt, dadurch gekennzeichnet, daß eine weitere Schwellenwertstufe (62) vorgesehen ist, deren Schwellenwert (Δ1) betragsmäßig kleiner als der der anderen Schwellenwertstufe (60) ist und die bei Überschreiten des kleineren Schwellenwertes (Δ1) ein Signal zum Konstanthalten der Hinterradbremsdrücke abgibt.

## Claims

1. Process for controlling the brake system of a motor vehicle, at least the brake pressure in the wheel brakes of the rear axle being controlled in order to distribute the braking force between a front axle and a rear axle, brake pressure being reduced at the rear axle brakes by means of a difference between a front-wheel rotational speed (VVA) and a rear-wheel rotational speed (VHA) when a predefined threshold value (Δ2) is exceeded, characterized in that the brake pressure at the rear-axle brakes is kept constant when a threshold value (Δ1) which is smaller in absolute value than the predefined threshold value (Δ2) is exceeded.

2. Process according to Claim 1, characterized in that a feedback pump (22) of the brake system is switched off during the reduction in pressure.

3. Process according to Claim 2, characterized in that the pressure in the rear-axle brakes follows the driver's specifications when both threshold values (Δ1, Δ2) are undershot.

4. Method according to Claim 2, characterized in that the smaller threshold value (Δ1) is dependent in terms of its absolute value on whether the vehicle is in a bend or travelling straight ahead.

5. Method according to one of Claims 2 to 4, characterized in that after the braking process is terminated when a reduction in pressure is being carried out at the rear axle, the feedback pump (22) of the brake system is switched on for a predetermined time (T).

6. Process according to Claim 5, characterized in that the predetermined time (T) is selected in such a way that the pressure medium which is emptied into a storage chamber during the pressure reduction phase is led off into a reservoir space.

7. Process according to Claim 5, characterized in that the actuation time (T) for the feedback pump (22) is dependent on the number of reduction pulses which are output.

8. Process according to one of the preceding claims, characterized in that the larger threshold value (Δ2) is dimensioned in such a way that the slip between the front-wheel rotational speeds and the rear-wheel rotational speeds is smaller in terms of absolute value than the slip threshold which leads to the activation of the anti-lock brake control system.

9. Process according to one of Claims 2 to 7, characterized in that the feedback pump 22 is actuated for a predefined time (T) after the termination of the braking process.

10. Device for controlling the brake system for a motor vehicle, having a control unit (10) which, in order to distribute the braking force between a front axle and a rear axle, controls at least the brake pressure at the rear wheels, and which comprises a threshold-value stage (60) which outputs a signal for reducing brake pressure in the rear-axle brakes by means of the difference between a front-wheel rotational speed (WA) and a rear-wheel rotational speed (VHA) when a predefined threshold value (Δ2) is exceeded, characterized in that a further threshold-value stage (62) is provided, the threshold value (Δ1) of which is smaller in terms of absolute value than that of the other threshold-value stage (60) and which, when the smaller threshold value (Δ1) is exceeded, outputs a signal for keeping the rear-wheel brake pressures constant.

## Revendications

1. Procédé pour la commande du système de freinage d'un véhicule, dans lequel, pour la répartition des forces de freinage entre un essieu avant et un essieu arrière, au moins la pression de freinage dans les freins de roue de l'essieu arrière est commandée, de façon telle que lors du dépassement d'un seuil (Δ2) prédéterminé par une différence entre une vitesse de rotation de roue avant (VVA) et une vitesse de rotation de roue arrière (VHA), la pression de freinage est délestée aux freins de l'essieu arrière,
caractérisé en ce que
lors du dépassement d'un seuil (Δ1) qui est proportionnellement plus petit que le seuil (Δ2), la pression de freinage au frein de l'essieu arrière est maintenue constante.

2. Procédé selon la revendication 1,
caractérisé en ce que
pendant le délestage en pression une pompe de refoulement (22) du système de freinage est arrêtée.

3. Procédé selon la revendication 2,
caractérisé en ce que
lors du dépassement des deux seuils (Δ1, Δ2), la pression du frein de l'essieu arrière suit les consignes du conducteur.

4. Procédé selon la revendication 2,
caractérisé en ce que
le plus petit des seuils (Δ1) est proportionnellement dépendant du fait que le véhicule est dans une trajectoire curviligne ou une trajectoire rectiligne.

5. Procédé selon l'une des revendications 2 à 4,
caractérisé en ce qu'
après la fin du processus de freinage par un délestage de pression à l'essieu arrière, la pompe de refoulement (22) du système de freinage est mise en marche pour un temps prédéterminé (T).

6. Procédé selon la revendication 5,
caractérisé en ce que
la valeur de temps prédéterminée (T) est choisie de telle sorte que la quantité de moyen de pression vidée dans une chambre d'accumulation pendant la phase de délestage de pression puisse être amenée dans un réservoir.

7. Procédé selon la revendication 5,
caractérisé en ce que
le temps de commande (T) pour la pompe de refoulement (22) dépend du nombre des impulsions de délestage délivrées.

8. Procédé selon l'une des revendications précédentes,
caractérisé en ce que
le plus grand des seuils (Δ2) est dimensionné de sorte que le glissement entre les vitesses de rotation des roues avant et arrière est proportionnellement plus petit que la valeur de glissement amenant à l'activation du système de régulation anti-blocage.

9. Procédé selon l'une des revendications 2 à 7,
caractérisé en ce que
la pompe de refoulement (22) est actionnée un temps prédéterminé (T) après la fin du processus de freinage.

10. Dispositif pour la commande du système de freinage d'un véhicule comprenant une unité de commande (10) qui commande, pour la répartition du freinage entre un essieu avant et un essieu arrière, au moins la pression de freinage aux roues arrière, avec un étage de seuil (60) qui, après le dépassement d'un seuil (Δ2) prédéterminé par la différence entre la vitesse de rotation d'une roue avant (VVA) et d'une roue arrière (VHA), délivre un signal pour le délestage en pression dans les freins de l'essieu arrière,
caractérisé en ce qu'
un autre étage de seuil (62) est prévu avec le seuil (Δ1) proportionnellement plus petit que l'autre étage à seuil (60), et délivre un signal pour le maintien constant de la pression de freinage dans les roues arrière lors du dépassement du plus petit des seuils (Δ1).
